# EUROPEAN PATENT APPLICATION

(11) **EP 4 099 160 A1**
(43) Date of publication of application: **07.12.2022**
(21) Application number: 20916786.5
(22) Date of filing: 30.01.2020
(51) Int. Cl.: G06F 9/445, G06F 9/48

(54) **SERVICE DESIGN DEVICE, SERVICE DESIGN METHOD, AND SERVICE DESIGN PROGRAM**

(71) Applicant: FUJITSU LIMITED, Kawasaki-shi, Kanagawa 211-8588 (JP)
(72) Inventor: FUJITA, Sokichi, Kawasaki-shi, Kanagawa 211-8588 (JP); JAYALATHGE, Chamin Hansi Ranaweera, Kawasaki-shi, Kanagawa 211-8588 (JP); OMISHIMA, Senchi, Kawasaki-shi, Kanagawa 211-8588 (JP)
(74) Representative: Haseltine Lake Kempner LLP
(86) International application number: PCT/JP2020/003558
(87) International publication number: WO 2021/152802

(57) **Abstract**

A service design device (101) receives selection of a plurality of APIs. The service design device (101) specifies a call order relation between APIs included in the plurality of APIs on the basis of at least one piece of information of specifications or a usage history of each of the plurality of selected APIs. The service design device (101) determines an execution order of the plurality of APIs on the basis of the specified call order relation between the APIs. For example, the service design device (101) determines an order in which the APIs having the call order relation with each other are executed according to the relation. Furthermore, the service design device (101) determines an order in which APIs having no call order relation with each other are executed in parallel.

## Description

### FIELD

The present invention relates to a service design device, a service design method, and a service design program.

### BACKGROUND ART

Conventionally, there is a cloud service for constructing a business system by combining various cloud and on-premises applications. Furthermore, there may be a case where multiple application programming interfaces (APIs) are combined to create a new API.

As a conventional technique, there is a method in which a normalization cost normalized using a processing cost of another service caused by an error of one service and an error occurrence probability is calculated for each service to determine execution order of services according to the calculated normalization cost. Furthermore, there is an assistant system for facilitating user interaction with a device and facilitating a use of local and/or remote services.

Furthermore, there is a technique of determining a sequence of updating multiple services displayed on a display device of a user terminal in a case where conditions for updating the current sequence of the multiple services are satisfied. Furthermore, there is a technique of verifying an operating status of a cloud service for providing a plant control function, selecting a cloud service on the basis of the verified operating status, and transmitting service information between the selected cloud service and a used device.

Examples of the related art include: [Patent Document 1] Japanese Laid-open Patent Publication No. 2010-020537; [Patent Document 2] Japanese Laid-open Patent Publication No. 2014-222510; [Patent Document 3] Japanese National Publication of International Patent Application No. 2019-505032; and [Patent Document 4] Japanese Laid-open Patent Publication No. 2018-112829.

### SUMMARY

### TECHNICAL PROBLEM

However, according to the conventional techniques, there is a problem that it takes time and effort to determine appropriate execution order of multiple APIs at a time of creating a new API by combining the multiple APIs.

In one aspect, it is an object of the present invention to facilitate design of a service using multiple APIs.

### SOLUTION TO PROBLEM

According to one embodiment, there is provided a service design device including a reception unit that receives selection of a plurality of APIs, a specifying unit that specifies a call order relation between APIs included in the plurality of APIs on the basis of at least one piece of information of specifications or a usage history of each of the plurality of selected APIs, and a determination unit that determines an execution order of the plurality of APIs on the basis of the call order relation between the APIs specified by the specifying unit.

### ADVANTAGEOUS EFFECTS OF INVENTION

According to one aspect of the present invention, an effect that design of a service using multiple APIs may be facilitated is exerted.

### BRIEF DESCRIPTION OF DRAWINGS

FIG. 1 is an explanatory diagram illustrating an example of a service design method according to an embodiment.
FIG. 2 is an explanatory diagram illustrating an exemplary system configuration of an information processing system 200.
FIG. 3 is a block diagram illustrating an exemplary hardware configuration of a service design device 101.
FIG. 4 is a block diagram illustrating an exemplary hardware configuration of a user terminal 201.
FIG. 5 is an explanatory diagram illustrating exemplary contents stored in an API repository 220.
FIG. 6 is a block diagram illustrating an exemplary functional configuration of the service design device 101.
FIG. 7 is an explanatory diagram (No. 1) illustrating a first determination example of execution order of multiple APIs.
FIG. 8 is an explanatory diagram (No. 2) illustrating the first determination example of the execution order of the multiple APIs.
FIG. 9 is an explanatory diagram (No. 1) illustrating a second determination example of the execution order of the multiple APIs.
FIG. 10 is an explanatory diagram (No. 2) illustrating the second determination example of the execution order of the multiple APIs.
FIG. 11 is an explanatory diagram illustrating an exemplary output of the execution order of the multiple APIs.
FIG. 12 is an explanatory diagram illustrating exemplary contents stored in an execution history table 1200.
FIG. 13 is an explanatory diagram illustrating a specific example of recommendation result information.
FIG. 14 is a flowchart (No. 1) illustrating an exemplary service design processing procedure of the service design device 101.
FIG. 15 is a flowchart (No. 2) illustrating an exemplary service design processing procedure of the service design device 101.

### DESCRIPTION OF EMBODIMENTS

Hereinafter, an embodiment of a service design device, a service design method, and a service design program according to the present invention will be described in detail with reference to the drawings.

### (Embodiment)

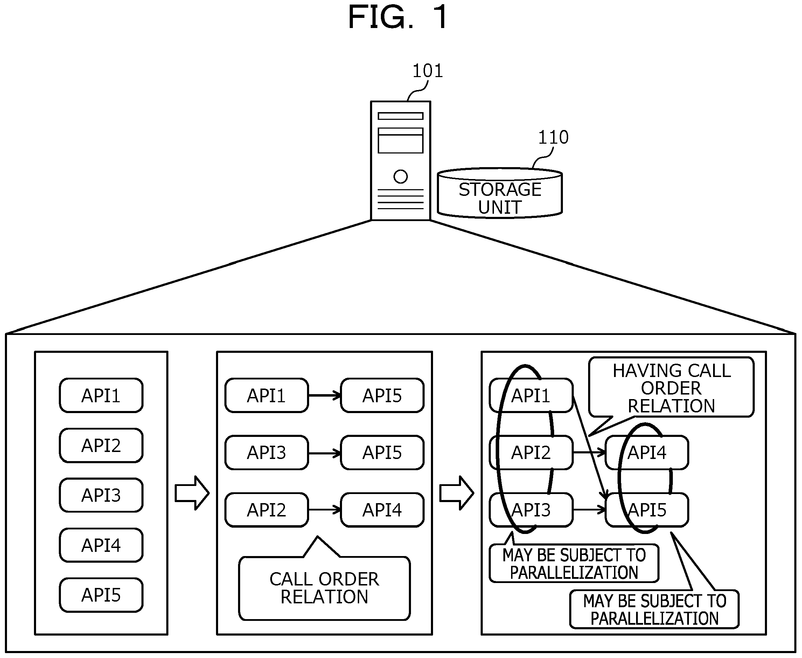

FIG. 1 is an explanatory diagram illustrating an example of a service design method according to an embodiment. In FIG. 1, a service design device 101 is a computer that determines execution order of multiple APIs. An API is an interface that connects pieces of software with each other, and for example, an operating system (OS) or an application provides a part of functions to another application in a usable manner.

Examples of the API include a Web API. The Web API is an interface between pieces of software called via a network using a protocol of a hypertext transfer protocol (HTTP). The API is implemented by, for example, a series of procedures, a collection of functions, or the like.

Here, there is a case where multiple APIs are combined to create a new API. For example, it is assumed to provide a function of searching articles posted on a posting service for articles containing a specific keyword, analyzing or processing the searched articles with a certain service, and transmitting a result thereof to another service. In this case, a new API is created by combining the APIs provided in individual services, and an application or service that provides the function thereof is designed.

However, simply executing the APIs in series results in an increase in execution time and cost. For example, when an execution time of an application increases, a waiting time of a user increases and a cost of infrastructure for running the application increases. In some cases, the user may not be able to determine in what order the execution is to be carried out in series.

Meanwhile, when the user is made to model parallel processing and an order relation of multiple APIs to reduce the execution time and cost, the work is complicated and it is difficult for a business user not familiar with information technology (IT) to use it. Furthermore, even for a user with high IT skills, it takes time and effort to carry out designing in which the execution time of the application is minimized, which may lead to a decrease in productivity.

In view of the above, in the present embodiment, a service design method of supporting high-quality API service design in which the user only needs to select multiple APIs that he/she wants to combine to specify appropriate execution order of the multiple APIs will be described. Hereinafter, exemplary processing of the service design device 101 will be described.
(1) The service design device 101 accepts selection of multiple APIs. Specifically, for example, the service design device 101 accepts selection of any APIs from an API list by an operation input made by the user, thereby accepting the selection of the multiple APIs. The API list is a list of selectable APIs.
   In the example of FIG. 1, it is assumed that an API 1, an API 2, an API 3, an API 4, and an API 5 are selected as multiple APIs that the user wants to combine.
(2) The service design device 101 refers to a storage unit 110 to specify an order relation of calls among the APIs included in the multiple APIs on the basis of at least one piece of information of specifications or a usage history of each of the multiple APIs that have been selected. Here, the storage unit 110 stores the information regarding the specifications and the usage history of the APIs.

The specifications of the API are, for example, information indicating a name, function, purpose, request and response formats, and the like of the API. Furthermore, the usage history of the API is information indicating a history when the API is executed, and represents, for example, another API executed in combination with the API, the execution order of the API at that time, and the like.

For example, it is assumed that a format of a request item and a response item of the API 1 is set to "[In: *, Out: image]". "In: *" indicates that any data is input as a request item. "Out: image" indicates that an image is output as a response item. Furthermore, it is assumed that a format of the request item and the response item of the API 5 is set to "[In: image, Out: *]". "In: image" indicates that an image is input as a request item. "Out: *" indicates that any data is output as a response item.

In this case, there may be an input-output relationship in which the format "image" of the response item of the API 1 matches with the format "image" of the request item of the API 5 and the response from the API 1 is input as a request of the API 5. Accordingly, the service design device 101 specifies "API 1 → API 5" as the call orde2r relation between the API 1 and the API 5 on the basis of the specifications of the API 1 and the specifications of the API 5, for example.

Furthermore, it is assumed that the API 2 and the API 4 have been used in combination in the past and that the API 4 has been executed most often after the API 2. In this case, the service design device 101 specifies "API 2 → API 4" as the call order relation between the API 2 and the API 4 on the basis of the usage history of the API 2 and the API 4, for example.

In the example of FIG. 1, it is assumed that "API 1 → API 5" is specified as the call order relation between the API 1 and the API 5 included in the selected API 1 to API 5. Furthermore, it is assumed that "API 3 → API 5" is specified as the call order relation between the API 3 and the API 5. Furthermore, it is assumed that "API 2 → API 4" is specified as the call order relation between the API 2 and the API 4.

(3) The service design device 101 determines the execution order of the multiple APIs on the basis of the specified call order relation between the APIs. Specifically, for example, the service design device 101 determines the order in which the APIs having a call order relation with each other are executed according to the relation. Furthermore, the service design device 101 determines the APIs having no call order relation with each other as the order of parallel execution.

In the example of FIG. 1, the API 1 and the API 5 of the selected API 1 to API 5 have the call order relation "API 1 → API 5", and the order of execution is determined according to the relation, accordingly. Furthermore, the API 3 and the API 5 have the call order relation "API 3 → API 5", and the order of execution is determined according to the relation, accordingly. Furthermore, the API 2 and the API 4 have the call order relation "API 2 → API 4", and the order of execution is determined according to the relation, accordingly.

Furthermore, the API 1, the API 2, and the API 3 have no order relation of calls, and the order is determined as parallel execution, accordingly. Note that the API 1 may be executed also in parallel with the API 4. However, the API 4 has the call order relation with the API 2, which is executed in parallel with the API 1. Accordingly, in this example, the API 1 and the API 4 are not to be executed in parallel. Furthermore, the API 4 and the API 5 have no call order relation, and the order is determined as parallel execution, accordingly.

Note that determining the order of two or more APIs as the parallel execution corresponds to, for example, setting those APIs as APIs that may be executed in parallel. In the example of FIG. 1, at a time of executing a new API in which the API 1 to API 5 are combined, depending on an execution status of the API 1 to API 3, the API 4 may be executed prior to the API 5 after the parallel execution of the API 1 to API 3 starts.

In this manner, according to the service design device 101, it becomes possible to derive the API execution order in consideration of the parallelism and the call order relation between the APIs simply by selecting multiple APIs that the user wants to combine. This makes it possible to specify the appropriate execution order of the multiple APIs at the time of combining the multiple APIs to create a new API, and to design the high-quality API service easily.

In the example of FIG. 1, the execution order in which the API 4 and the API 5 are executed in parallel after the API 1, the API 2, and the API 3 are executed in parallel is determined. Note that determining the order of two or more APIs (e.g., API 4 and API 5) as the parallel execution corresponds to setting those APIs as APIs that may be executed in parallel. For example, at a time of executing a new API in which the API 1 to API 5 are combined, depending on the execution status of the API 1 to API 3, the API 4 may be executed prior to the API 5 after the parallel execution of the API 1 to API 3 starts.

### (Exemplary System Configuration of Information Processing System 200)

Next, an exemplary system configuration of an information processing system 200 including the service design device 101 illustrated in FIG. 1 will be described. The information processing system 200 is applied to, for example, a computer system that provides an execution environment for APIs.

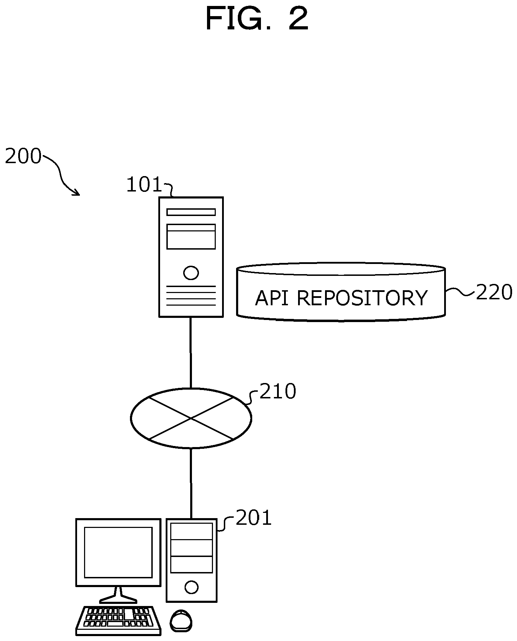

FIG. 2 is an explanatory diagram illustrating an exemplary system configuration of the information processing system 200. In FIG. 2, the information processing system 200 includes the service design device 101 and a user terminal 201. In the information processing system 200, the service design device 101 and the user terminal 201 are connected via a wired or wireless network 210. The network 210 is, for example, the Internet, a local area network (LAN), a wide area network (WAN), or the like.

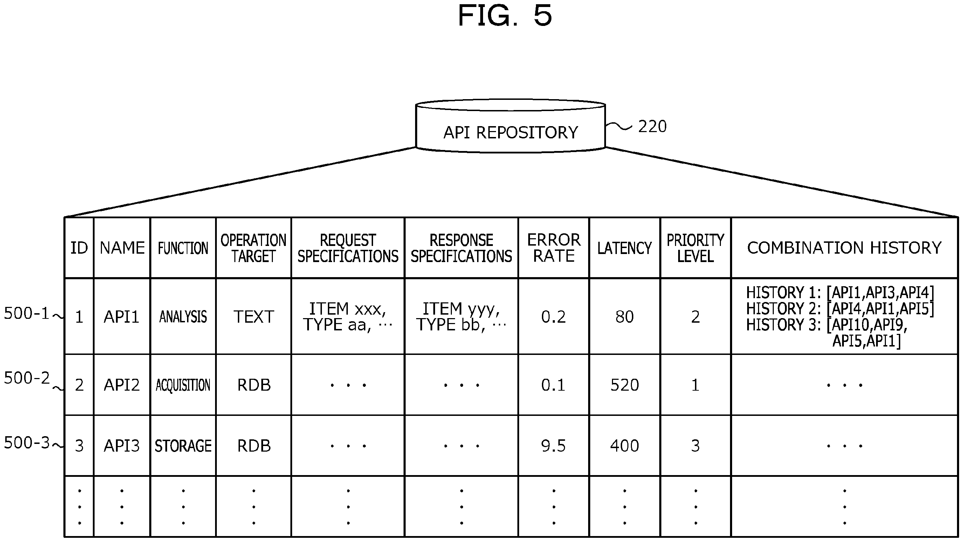

Here, the service design device 101 includes an API repository 220. The API repository 220 stores information regarding specifications and a usage history of an API. The storage unit 110 illustrated in FIG. 1 corresponds to, for example, the API repository 220. Contents stored in the API repository 220 will be described later with reference to FIG. 5. The service design device 101 is, for example, a cloud computing server.

The user terminal 201 is a computer used by a user of the information processing system 200. The user is, for example, a person who creates a new API by combining multiple APIs, or a person who uses the new API. The user terminal 201 is, for example, a personal computer (PC), a tablet PC, or the like.

Note that, although the service design device 101 and the user terminal 201 are provided separately in the example of FIG. 2, it is not limited to this. For example, the service design device 101 may be implemented by the user terminal 201.

### (Exemplary Hardware Configuration of Service Design Device 101)

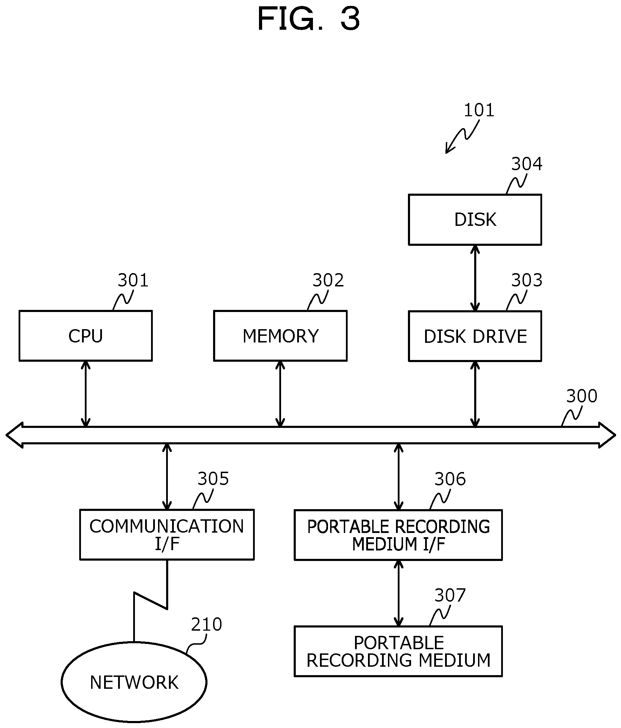

FIG. 3 is a block diagram illustrating an exemplary hardware configuration of the service design device 101. In FIG. 3, the service design device 101 includes a central processing unit (CPU) 301, a memory 302, a disk drive 303, a disk 304, a communication interface (I/F) 305, a portable recording medium I/F 306, and a portable recording medium 307. Furthermore, the individual components are connected to each other by a bus 300.

Here, the CPU 301 performs overall control of the service design device 101. The CPU 301 may include a plurality of cores. The memory 302 includes, for example, a read only memory (ROM), a random access memory (RAM), a flash ROM, and the like. Specifically, for example, the flash ROM stores an operating system (OS) program, the ROM stores an application program, and the RAM is used as a work area for the CPU 301. The programs stored in the memory 302 are loaded into the CPU 301 to cause the CPU 301 to execute coded processing.

The disk drive 303 controls reading/writing of data from/to the disk 304 under the control of the CPU 301. The disk 304 stores data written under the control of the disk drive 303. Examples of the disk 304 include a magnetic disk, an optical disk, and the like.

The communication I/F 305 is connected to the network 210 through a communication line, and is connected to an external computer (e.g., user terminal 201 illustrated in FIG. 2) via the network 210. Then, the communication I/F 305 manages an interface between the network 210 and the inside of the device, and controls input and output of data from the external computer. For example, a modem, a LAN adapter, or the like may be employed as the communication I/F 305.

The portable recording medium I/F 306 controls reading/writing of data from/to the portable recording medium 307 under the control of the CPU 301. The portable recording medium 307 stores data written under the control of the portable recording medium I/F 306. Examples of the portable recording medium 307 include a compact disc (CD)-ROM, a digital versatile disk (DVD), a universal serial bus (USB) memory, and the like.

Note that the service design device 101 may include, for example, a solid state drive (SSD), an input device, a display, and the like in addition to the components described above. Furthermore, the service design device 101 may not include, for example, the disk drive 303, the disk 304, the portable recording medium I/F 306, and the portable recording medium 307 among the components described above.

### (Exemplary Hardware Configuration of User Terminal 201)

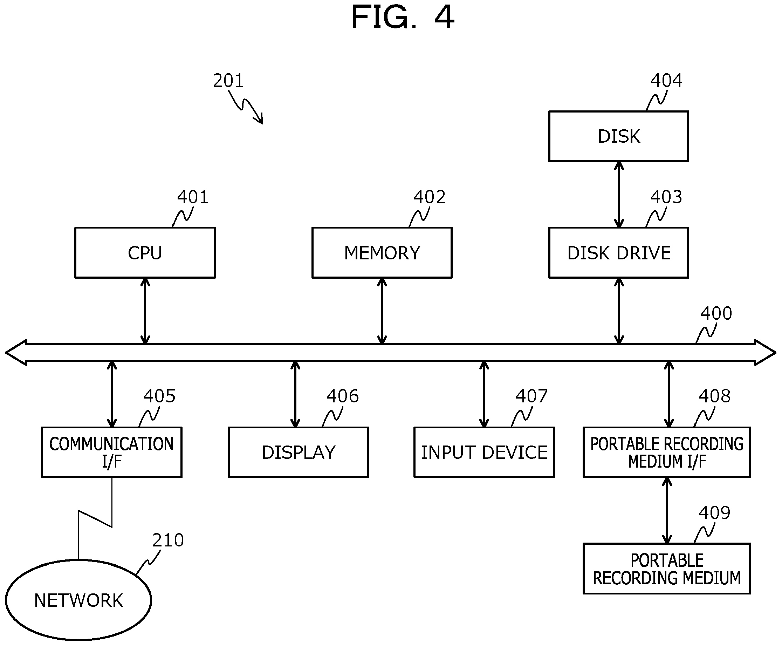

FIG. 4 is a block diagram illustrating an exemplary hardware configuration of the user terminal 201. In FIG. 4, the user terminal 201 includes a CPU 401, a memory 402, a disk drive 403, a disk 404, a communication I/F 405, a display 406, an input device 407, a portable recording medium I/F 408, and a portable recording medium 409. Furthermore, the individual components are connected to each other by a bus 400.

Here, the CPU 401 performs overall control of the user terminal 201. The CPU 401 may include a plurality of cores. The memory 402 is a storage unit including, for example, a ROM, a RAM, a flash ROM, and the like. Specifically, for example, the flash ROM or the ROM stores various programs, and the RAM is used as a work area for the CPU 401. The programs stored in the memory 402 are loaded into the CPU 401 to cause the CPU 401 to execute coded processing.

The disk drive 403 controls reading/writing of data from/to the disk 404 under the control of the CPU 401. The disk 404 stores data written under the control of the disk drive 403.

The communication I/F 405 is connected to the network 210 through a communication line, and is connected to another computer (e.g., service design device 101) via the network 210. Then, the communication I/F 405 manages an interface between the network 210 and the inside, and controls input and output of data from the another computer.

The display 406 is a display device that displays data such as a document, an image, functional information, or the like, as well as a cursor, an icon, or a tool box. For example, a liquid crystal display, an organic electroluminescence (EL) display, or the like may be employed as the display 406.

The input device 407 includes keys for inputting characters, numbers, various instructions, and the like, and inputs data. The input device 407 may be a keyboard, a mouse, or the like, or may be a touch-panel input pad, a numeric keypad, or the like.

The portable recording medium I/F 408 controls reading/writing of data from/to the portable recording medium 409 under the control of the CPU 401. The portable recording medium 409 stores data written under the control of the portable recording medium I/F 408.

Note that the user terminal 201 may not include, for example, the disk drive 403, the disk 404, the portable recording medium I/F 408, the portable recording medium 409, and the like among the components described above.

### (Contents Stored in API Repository 220)

Next, contents stored in the API repository 220 included in the service design device 101 will be described with reference to FIG. 5. The API repository 220 is implemented by, for example, a storage device such as the memory 302, the disk 304, or the like illustrated in FIG. 3.

FIG. 5 is an explanatory diagram illustrating exemplary contents stored in the API repository 220. In FIG. 5, the API repository 220 has fields for ID, a name, a function, an operation target, request specifications, response specifications, an error rate, latency, a priority level, and a combination history. By setting information to each field, API management information (e.g., API management information 500-1 to 500-3) is stored as a record.

Here, the ID indicates an identifier for uniquely identifying the API. The name indicates a name of the API. The function indicates a function implemented by the API. The operation target indicates an operation target of the API. The request specifications indicate specifications of a request of the API, which indicate, for example, a format (item name, type, etc.) of the request item.

The response specifications indicate specifications of a response of the API, which indicate, for example, a format (item name, type, etc.) of the response item. The error rate indicates a rate at which an error occurs when the API is executed (unit: %). The latency indicates an execution time when the API is executed (unit: ms). The priority level indicates a priority level of the API execution. It indicates that the API is to be executed at a higher priority level as the priority level of the API is higher. The combination history indicates multiple APIs used in combination in the past.

Among the fields in the API repository 220, for example, the ID, the name, the function, the operation target, the request specifications, the response specifications, and the priority level represent the specifications of the API. Furthermore, the error rate, the latency, and the combination history represent the usage history of the API.

For example, the API management information 500-1 indicates a name "API 1", a function "analysis", an operation target "text", request specifications "item xxx, type aa, etc.", and response specifications "item yyy, type bb, etc." of the API with ID "1". Furthermore, an error rate "0.2 [%]", latency "80 [ms]", a priority level "2", and a combination history "history 1: [API 1, API 3, API 4], history 2: [API 4, API 1, API 5], and history 3: [API 10, API 9, API 5, API 1]" are indicated. For example, the history 1: [API 1, API 3, API 4] indicates that they have been used in the order of "API 1 → API 3 → API 4".

Note that the API repository 220 may include an objective item indicating a purpose of the API. For example, "image analysis", "image acquisition", or the like is set as the objective item. However, the objective item of the API may be specified from the function, the operation target, or the like of the API. Furthermore, the API repository 220 may include an authentication method, provider information, a call history, a latency history, and the like of the API. The call history indicates information to be the source of the error rate calculation (e.g., success/failure of API execution result, request information at a time of a call, response information, etc.). The latency history indicates information to be the source of the latency calculation.

### (Exemplary Functional Configuration of Service Design Device 101)

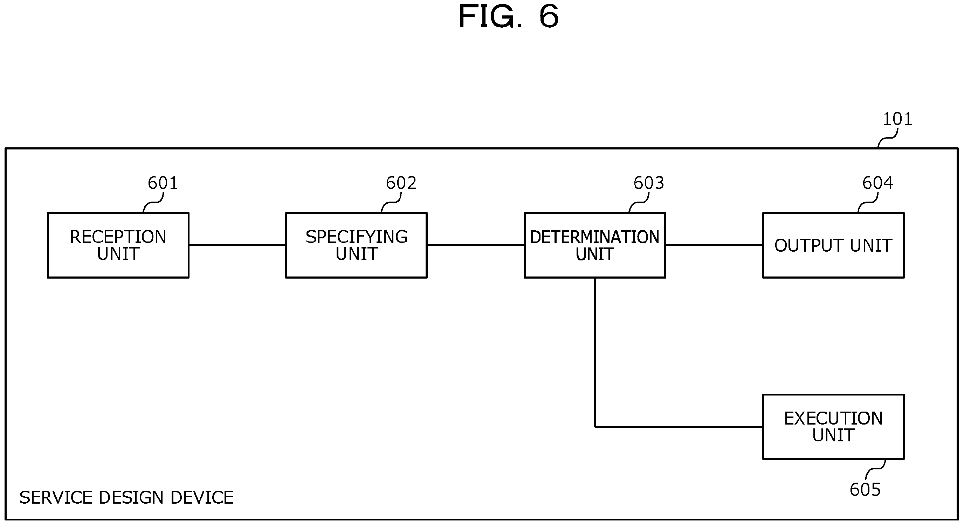

FIG. 6 is a block diagram illustrating an exemplary functional configuration of the service design device 101. In FIG. 6, the service design device 101 includes a reception unit 601, a specifying unit 602, a determination unit 603, an output unit 604, and an execution unit 605. Specifically, for example, the reception unit 601 to the execution unit 605 implement the functions by causing the CPU 301 to execute a program stored in a storage device such as the memory 302, the disk 304, the portable recording medium 307, or the like illustrated in FIG. 3, or by the communication I/F 305. A processing result of each functional unit is stored in, for example, a storage device such as the memory 302, the disk 304, or the like.

The reception unit 601 accepts selection of multiple APIs. The API to be selected is an API for creating a new API by combining the multiple APIs, and is, for example, a Web API. The API selection is carried out on, for example, an API selection screen (not illustrated) displayed on the display 406 (see FIG. 4) of the user terminal 201 illustrated in FIG. 2. The API selection screen is, for example, an operation screen for selecting multiple APIs that the user wants to combine from a list of selectable APIs.

More specifically, for example, the user terminal 201 accepts, on the API selection screen, the selection of the multiple APIs by an operation input made by the user using the input device 407 (see FIG. 4). Then, the user terminal 201 transmits the API selection result to the service design device 101. In this case, the reception unit 601 receives the API selection result from the user terminal 201, thereby accepting the selection of the multiple APIs.

Furthermore, the reception unit 601 may accept the selection of the multiple APIs by an operation input made by the user using an input device (not illustrated) of its own device. Furthermore, the reception unit 601 may accept the selection of the multiple APIs by accepting an input of an API name by an operation input made by the user using an input device (not illustrated) of its own device.

Furthermore, the reception unit 601 may accept, in addition to the selection of the multiple APIs, designation of a function to be implemented by the multiple APIs. The designation of the function is made on, for example, the API selection screen displayed on the user terminal 201. The designation of the function may be made by, for example, selection or input of a function name, or may be made by selection or input of a sentence representing contents of the function.

More specifically, for example, the user terminal 201 accepts, on the API selection screen, the designation of the function to be implemented by the multiple APIs by an operation input made by the user. Then, the user terminal 201 transmits the API selection result including information for specifying the designated function to the service design device 101. In this case, the reception unit 601 receives the API selection result from the user terminal 201, thereby accepting the selection of the multiple APIs and also accepting the function to be implemented by the multiple APIs.

The specifying unit 602 specifies the call order relation between the APIs included in the multiple APIs on the basis of at least one piece of information of specifications or a usage history of each of the multiple APIs that have been selected. The specifications of the API are, for example, information indicating a name, function, purpose, request and response formats, execution priority level, and the like of the API.

Furthermore, the usage history of the API is, for example, information indicating a combination history, an error rate, latency, and the like of the API. The combination history of the API indicates multiple APIs used in combination in the past, and the execution order of the multiple APIs. The error rate indicates a rate at which an error occurs when the API is executed. The latency indicates an execution time when the API is executed.

The specifications and the usage history of the API are specified from, for example, the API repository 220 illustrated in FIG. 5. Specifically, for example, the specifying unit 602 refers to the API repository 220 to determine whether or not a format of a response item of a first API matches with a format of a request item of a second API among the multiple APIs that have been selected. Here, in a case where the format of the response item of the first API matches with the format of the request item of the second API, the specifying unit 602 specifies the call order relation from the first API to the second API.

Furthermore, the specifying unit 602 refers to the API repository 220 to compare the objective item of the first API with the objective item of the second API. Then, in a case where the specifying unit 602 determines that there is a dependence relationship between the first API and the second API from the comparison result, it specifies the call order relation of the first API and the second API. As an example, it is assumed that the objective item of the first API is "analysis of an image or text" and the objective item of the second API is "acquisition of an image or text". In this case, there is a dependence relationship that the image or text obtained by the second API is analyzed by the first API, and the specifying unit 602 specifies the call order relation from the second API to the first API, accordingly.

Furthermore, the specifying unit 602 refers to the API repository 220 to specify the combination history of the first API and the second API. Then, the specifying unit 602 specifies the call order relation of the first API and the second API on the basis of the specified combination history of the first API and the second API. As an example, it is assumed that there is a history that the first API and the second API have been used in combination, the second API has been executed immediately after the first API "100" times, and the first API has been executed immediately after the second API "50" times. In this case, the specifying unit 602 specifies the call order relation from the first API, which is used more frequently, to the second API.

Furthermore, the call order relation between the APIs may be specified by a provider or user of the API. In this case, the specifying unit 602 specifies the call order relation between the APIs specified by the provider or user of the API.

Furthermore, an execution priority level may be set in advance in each API as specifications. The execution priority level indicates that the API is to be executed at a higher priority level as the priority level of the API is higher. The execution priority level is set on the basis of a unified value standard in all the APIs in the API repository 220, for example. In this case, in a case where the execution priority level of the first API is higher than the execution priority level of the second API among the multiple APIs that have been selected, the specifying unit 602 may specify the call order relation from the first API to the second API.

The determination unit 603 determines the execution order of the multiple selected APIs on the basis of the specified call order relation between the APIs. Specifically, for example, the determination unit 603 determines the APIs for which the call order relation with each other is specified as the order of execution according to the relation. Furthermore, the determination unit 603 determines the APIs for which the call order relation with each other is not specified as the order of parallel execution.

Furthermore, the determination unit 603 may determine the execution order of the multiple APIs further on the basis of maximum multiplicity. Here, the maximum multiplicity indicates the upper limit of the number of APIs that may be executed in parallel. For example, the maximum multiplicity is set in advance and stored in a storage device such as the memory 302, the disk 304, or the like.

Specifically, for example, the determination unit 603 determines the APIs for which the call order relation with each other is not specified as the order of parallel execution in such a manner that the maximum multiplicity is not exceeded. Note that the maximum multiplicity is set according to, for example, an API protocol or a hardware resource of a computer (e.g., service design device 101) that executes the service to be designed (new API created by combining multiple APIs).

Furthermore, the determination unit 603 may determine the execution order of the multiple APIs further on the basis of an error rate when each of the APIs is executed. Specifically, for example, the API with a higher error rate may be determined to be earlier in the order among the multiple APIs. As a result, an error is likely to occur at an earlier stage, whereby wasted time and cost at the time of error occurrence may be suppressed.

More specifically, for example, the determination unit 603 classifies the multiple APIs into a plurality of groups on the basis of the specified call order relation between the APIs. At this time, the determination unit 603 classifies the APIs for which the call order relation with each other is not specified into the same group while classifying the APIs for which the call order relation with each other is specified into different groups. Furthermore, the determination unit 603 sets an order relation between groups according to the call order relation between the APIs.

In the following descriptions, the plurality of groups into which the multiple APIs are classified may be referred to as "groups G1 to Gn" (n: natural number of 2 or more). Furthermore, any group of the groups G1 to Gn may be referred to as a "group Gi" (i = 1, 2, ..., n).

Next, in a case where the number of APIs in any group Gi of the classified groups G1 to Gn exceeds the maximum multiplicity, the determination unit 603 classifies the APIs in the group Gi into a plurality of subgroups on the basis of the error rate of each of the APIs in the group Gi. However, the determination unit 603 makes a classification in such a manner that the number of APIs in each of the subgroups does not exceed the maximum multiplicity.

Furthermore, in a case where the number of APIs in any group Gi of the classified groups G1 to Gn exceeds the maximum multiplicity, the determination unit 603 may classify the APIs in the group Gi into a plurality of subgroups on the basis of the error rate and the latency of each of the APIs in the group Gi. At this time, the determination unit 603 sets an order relation between subgroups.

In the following descriptions, the plurality of subgroups in the group Gi may be referred to as "subgroups s1 to sm" (m: natural number of 2 or more). Furthermore, any subgroup of the subgroups s1 to sm may be referred to as a "subgroup sj" (j = 1, 2, ..., m).

Then, the determination unit 603 determines the execution order of the multiple APIs on the basis of the groups G1 to Gn and the subgroups s1 to sm in the group Gi. For example, the determination unit 603 determines the order in which the APIs in different groups are executed in series according to the order relation between the groups while executing the APIs in the same group in parallel. Furthermore, the determination unit 603 determines the order in which the APIs in different subgroups are executed in series according to the order relation between the subgroups while executing the APIs in the same subgroup in parallel.

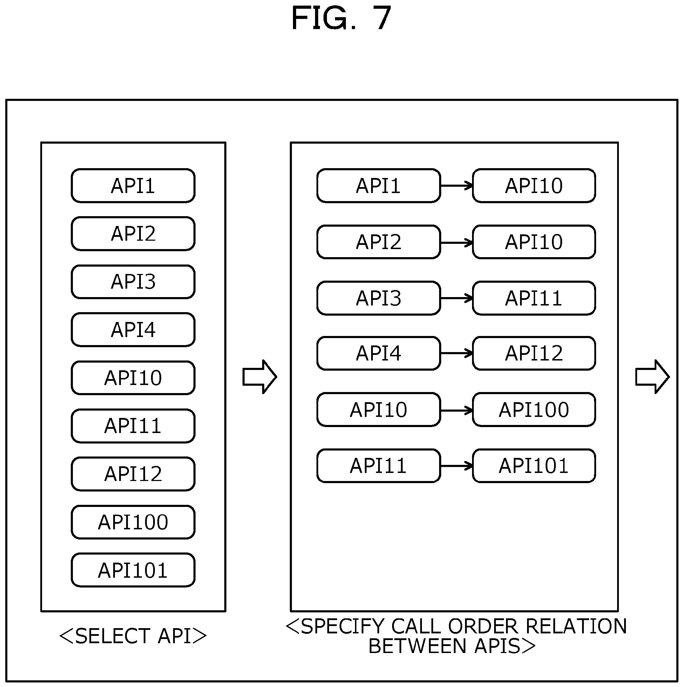

Note that exemplary determination of the execution order of the multiple APIs will be described later with reference to FIGs. 7 to 10.

The output unit 604 outputs the determined execution order of the multiple APIs. Examples of an output format of the output unit 604 include storing in a storage device such as the memory 302, the disk 304, or the like, transmission to another computer (e.g., user terminal 201) with the communication I/F 305, displaying on a display (not illustrated), printing out to a printer (not illustrated), and the like.

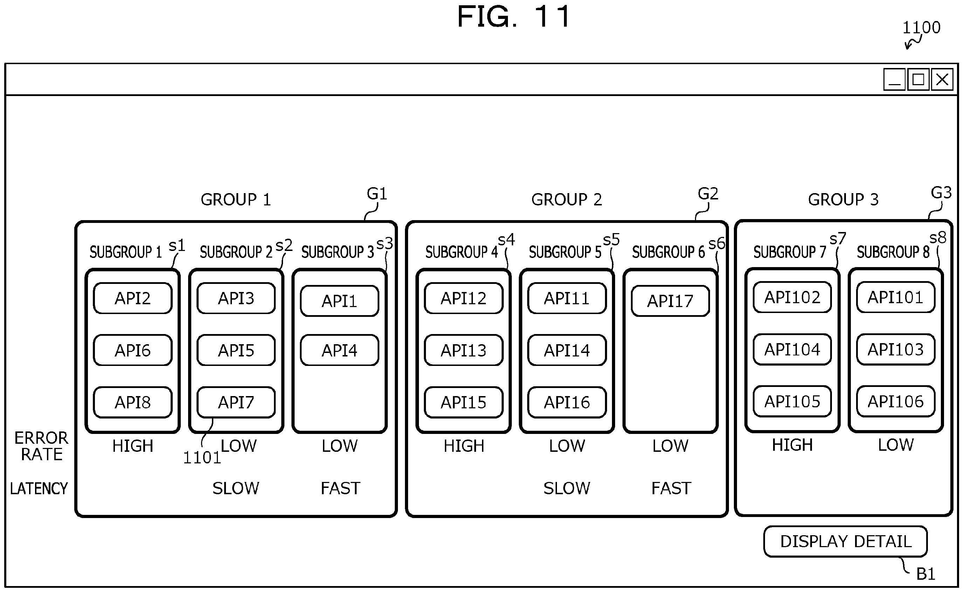

Note that exemplary output of the execution order of the multiple APIs will be described later with reference to FIG. 11.

The execution unit 605 executes the multiple APIs according to the determined execution order of the multiple APIs. In other words, the execution unit 605 executes a new API created by combining the multiple APIs on the basis of the determined execution order of the multiple APIs.

Specifically, for example, the execution unit 605 executes the APIs in different groups in series according to the order relation between the groups while executing the APIs in the same group in parallel. Furthermore, in a case where there are the subgroups s1 to sm in the group Gi, the execution unit 605 executes the APIs in different subgroups in series according to the order relation between the subgroups while executing the APIs in the same subgroup in parallel.

Note that values of various parameters used when each API is executed are specified by, for example, an operation input made by the user. In the execution processing of each API, for example, an API request is created, and the created API request is transmitted to the web server that provides each API. The API request is for requesting API execution, and includes, for example, values of various parameters. As a result, in the web server, the API is executed on the basis of the values of the various parameters, and an API response is transmitted to the service design device 101.

Furthermore, the output unit 604 may output the execution result of the multiple executed APIs. Here, the execution result of the multiple APIs is the execution result of the new API created by combining the multiple APIs, which is, for example, information requested by the new API, success/failure of the execution result of the new API, and the like.

Furthermore, the output unit 604 may output the determined execution order of the multiple APIs in association with the function implemented by the multiple selected APIs. This makes it possible to record the multiple APIs that implement the function and the execution order of the multiple APIs in association with the function.

For example, the service design device 101 may output, in response to the acceptance of function designation, information for specifying the execution order of the multiple APIs corresponding to the designated function. This allows the user to determine which APIs are to be combined and in what order the APIs are to be executed to implement a certain function.

Furthermore, the output unit 604 may output the determined execution order of the multiple APIs and the execution time and the success/failure of the execution result when the multiple APIs are executed according to the execution order in association with the function implemented by the multiple selected APIs. The execution time indicates a time needed from when the execution of the multiple APIs (new API created by combining the multiple APIs) starts until when the execution of the multiple APIs ends.

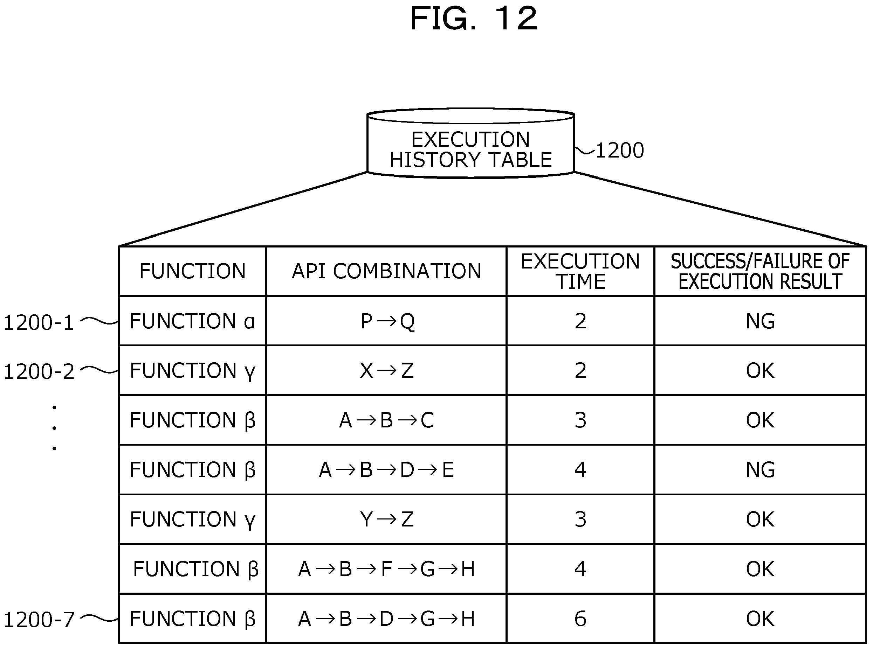

The success/failure of the execution result indicates whether or not the execution of the multiple APIs has succeeded. Specifically, for example, the output unit 604 records, in an execution history table 1200 as illustrated in FIG. 12 to be described later, the execution order, the execution time, and the success/failure of the execution result of the multiple APIs in association with the function implemented by the multiple APIs.

This makes it possible to record, in association with the function, the multiple APIs that implement the function, the execution order of the multiple APIs, and the execution time and the success/failure of the execution result when the multiple APIs are executed according to the execution order. Note that the function implemented by the multiple APIs may be expressed by a keyword, or may be expressed by a sentence, for example.

For example, the service design device 101 may output, in response to the acceptance of the function designation, information for specifying the execution order of the multiple APIs corresponding to the designated function and the execution time and the success/failure of the execution result when the multiple APIs are executed according to the execution order. This allows the user to determine which APIs are to be combined and in what order the APIs are to be executed to implement a certain function.

Note that, of the functional units of the service design device 101 described above, the execution unit 605 may be implemented by another computer different from the service design device 101. In this case, in the another computer, the multiple APIs are executed according to the execution order of the multiple APIs determined by the service design device 101. Furthermore, each of the functional units of the service design device 101 described above may be implemented by the user terminal 201.

### (Exemplary Determination of Execution Order of Multiple APIs)

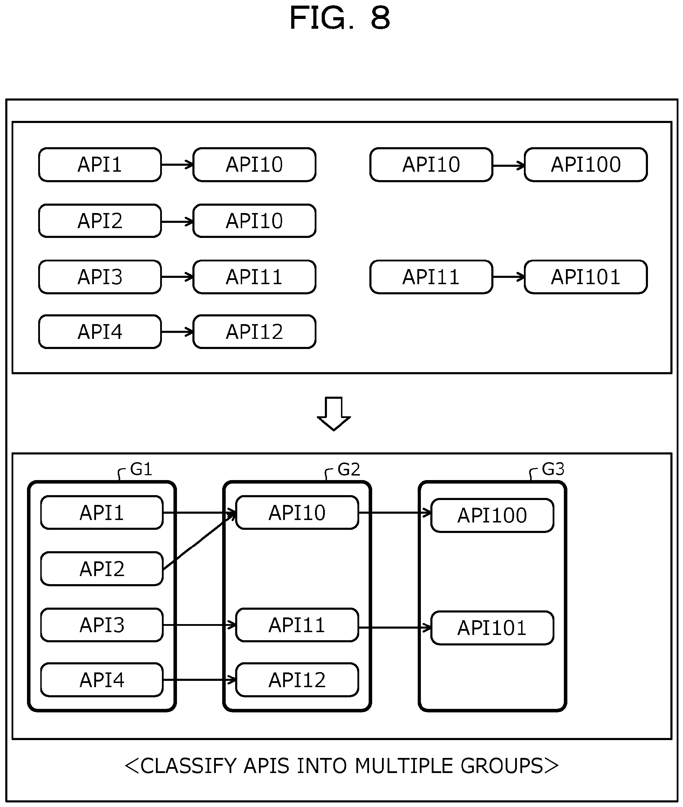

Next, exemplary determination of the execution order of the multiple APIs will be described with reference to FIGs. 7 to 10. First, first exemplary determination of the execution order of the multiple APIs will be described with reference to FIGs. 7 and 8.

FIGs. 7 and 8 are explanatory diagrams illustrating the first exemplary determination of the execution order of the multiple APIs. In FIG. 7, first, the reception unit 601 accepts selection of multiple APIs. Here, an API 1, API 2, API 3, API 4, API 10, API 11, API 12, API 100, and API 101 are selected as the multiple APIs.

Next, the specifying unit 602 refers to the API repository 220 to specify a call order relation between APIs included in the multiple APIs on the basis of specifications and a usage history of each of the APIs. Here, "API 1 → API 10" is specified as the call order relation between the API 1 and the API 10. "API 2 → API 10" is specified as the call order relation between the API 2 and the API 10.

Furthermore, "API 3 → API 11" is specified as the call order relation between the API 3 and the API 11. "API 4 → API 12" is specified as the call order relation between the API 4 and the API 12. "API 10 → API 100" is specified as the call order relation between the API 10 and the API 100. "API 11 → API 101" is specified as the call order relation between the API 11 and the API 101.

In FIG. 8, the determination unit 603 classifies the multiple APIs into a plurality of groups G1 to Gn on the basis of the specified call order relation between the APIs. Specifically, for example, the determination unit 603 classifies the APIs for which the call order relation with each other is not specified into the same group while classifying the APIs for which the call order relation with each other is specified into different groups.

At this time, the determination unit 603 may classify the multiple APIs into a plurality of groups in such a manner that the number of APIs included in the group is maximized, for example. Furthermore, the determination unit 603 may classify the multiple APIs into a plurality of groups in such a manner that the number of groups is minimized.

For example, the API 1 and the API 10 have a call order relation, and are classified into different groups, accordingly. Furthermore, the API 10 and the API 100 have a call order relation, and are classified into different groups, accordingly. Furthermore, the API 1 and the API 2 have no call order relation, and are classified into the same group, accordingly.

Here, the API 1, the API 2, the API 3, and the API 4 are classified into the group G1, the API 10, the API 11, and the API 12 are classified into the group G2, and the API 100 and the API 101 are classified into the group G3. Furthermore, the order relation "group G1 → group G2 → group G3" is set for the groups G1 to G3.

Note that it is assumed that the number of APIs in each of the groups G1 to G3 does not exceed the maximum multiplicity.

Then, the determination unit 603 determines the order in which the APIs in different groups are executed in series while executing the APIs in the same group in parallel according to the order relation among the groups of the groups G1 to G3. Here, the execution order in which the API 10, the API 11, and the API 12 in the group G2 are executed in parallel after the API 1, the API 2, the API 3, and the API 4 in the group G1 are executed in parallel and then the API 100 and the API 101 in the group G3 are executed in parallel is determined.

This makes it possible to derive the API execution order in consideration of the parallelism and the call order relation between the APIs for the multiple APIs (APIs 1 to 4, APIs 10 to 12, API 100, and API 101) selected by the user.

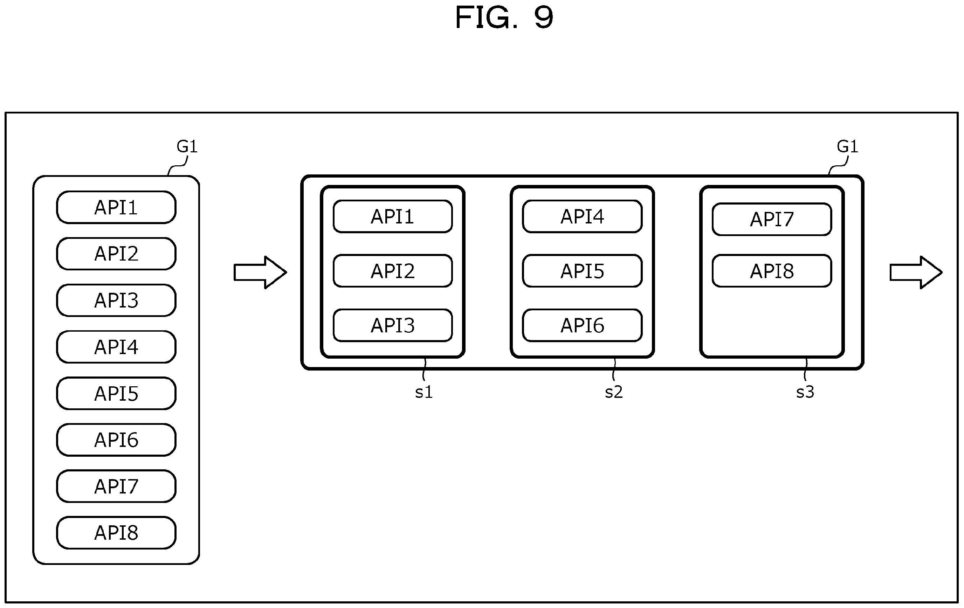

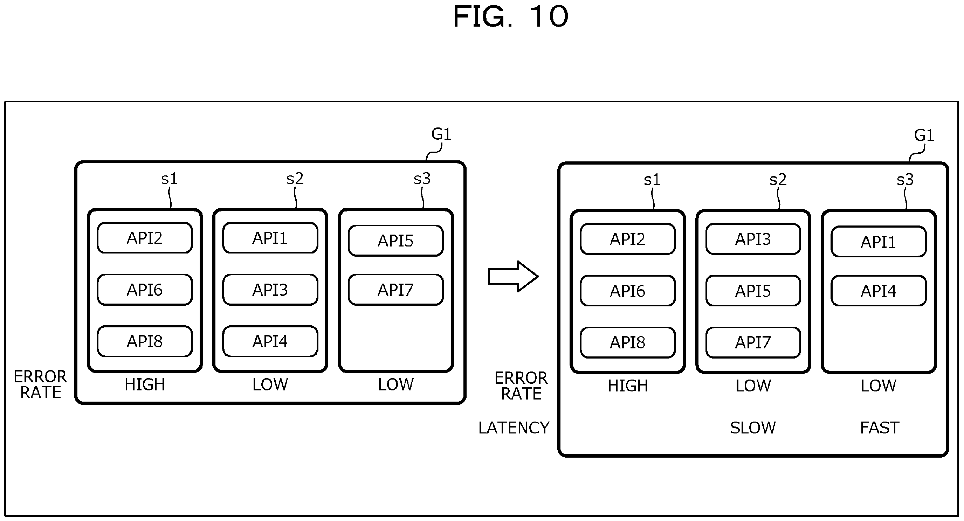

Next, second exemplary determination of the execution order of the multiple APIs will be described with reference to FIGs. 9 and 10. Here, a case where the number of APIs in the group Gi of the groups G1 to Gn into which the multiple APIs are classified exceeds the maximum multiplicity will be described.

FIGs. 9 and 10 are explanatory diagrams illustrating the second exemplary determination of the execution order of the multiple APIs. In FIG. 9, the group G1 including the APIs 1 to 8 is illustrated. Here, assuming that the maximum multiplicity is "3", the number of APIs "8" in the group G1 exceeds the maximum multiplicity.

In this case, the determination unit 603 classifies the APIs in the group G1 into the subgroups s1 to sm in such a manner that the number of APIs in each of the subgroups does not exceed the maximum multiplicity. More specifically, for example, the determination unit 603 classifies the APIs in the group G1 into the subgroups s1 to sm in such a manner that the number of APIs in each of the subgroups does not exceed the maximum multiplicity and is maximized.

Here, the API 1, the API 2, and the API 3 are classified into the subgroup s1, the API 4, the API 5, and the API 6 are classified into the subgroup s2, and the API 7 and the API 8 are classified into the subgroup s3. Furthermore, the order relation "subgroup s1 → subgroup s2 → subgroup s3" is set for the subgroups s1 to s3.

In FIG. 10, the determination unit 603 updates the APIs belonging to the individual subgroups s1 to s3 on the basis of the error rate of each of the APIs in the group G1. Specifically, for example, the determination unit 603 updates the APIs belonging to the individual subgroups s1 to s3 in such a manner that the API with a higher error rate comes earlier in the order among the APIs 1 to 8 in the group G1.

Here, the API 2, the API 6, and the API 8, which have higher error rates, are classified into the subgroup s1. Furthermore, the API 1, the API 3, and the API 4, which have error rates lower than those of the API 2, the API 6, and API 8, are classified into the subgroup s2. Furthermore, the API 5 and the API 7, which have error rates lower than those of the API 2, the API 6, and the API 8, are classified into the subgroup s3.

Note that only the APIs with error rates equal to or higher than a preset threshold value may belong to the subgroup s1 (first subgroup).

Next, the determination unit 603 updates the APIs belonging to the individual subgroups s2 and s3 on the basis of the latency of each of the APIs in the subgroups s2 and s3 other than the subgroup s1. Specifically, for example, the determination unit 603 updates the APIs belonging to the individual subgroups s2 and s3 in such a manner that the total latency obtained by adding the latency of the subgroup s2 and the latency of the subgroup s3 is minimized. At this time, the determination unit 603 may update the APIs belonging to the individual subgroups s2 and s3 in such a manner that the latency of the subgroup s2 becomes longer than that of the subgroup s3.

The latency of each of the subgroups s2 and s3 is determined on the basis of the longest latency of the latencies of the individual APIs belonging to the individual subgroups s2 and s3. For example, in a case where the latency of the API 1 is the longest among the API 1, the API 3, and the API 4 belonging to the subgroup s2, the latency of the subgroup s2 is determined on the basis of the latency of the API 1.

Here, the API 3, the API 5, and the API 7 are classified into the subgroup s2, and the API 1 and the API 4 are classified into the subgroup s3 so that the total latency of the subgroup s2 and the subgroup s3 is minimized. Furthermore, the latency (slow) of the subgroup s2 is longer than the latency (fast) of the subgroup s3.

Then, the determination unit 603 determines, for the group G1, the order in which the APIs in different subgroups are executed in series while executing the APIs in the same subgroup in parallel according to the order relation among the subgroups of the subgroups s1 to s3. Here, for the group G1, the execution order in which the API 3, the API 5, and the API 7 in the subgroup s2 are executed in parallel after the API 2, the API 6, and the API 8 in the subgroup s1 are executed in parallel and then the API 1 and the API 4 in the subgroup s3 are executed in parallel is determined.

This makes it possible to determine, in a case where the number of APIs in the group G1 exceeds the maximum multiplicity, the execution order in which the new API may be executed efficiently in consideration of the error rate and the latency of each of the APIs in the group G1.

For example, by setting the API with a higher error rate in the group G1 to come earlier in the order, it becomes possible to suppress wasted time and cost at the time of error occurrence. Furthermore, by adjusting the APIs belonging to the individual subgroups s1 and s2 in such a manner that the total latency of the subgroup s2 and the subgroup s3 is minimized, it becomes possible to shorten the execution time. Furthermore, by making adjustment in such a manner that the latency of the subgroup s2 is slower than that of the subgroup s3, it becomes possible to suppress wasted time and cost at the time of error occurrence.

### (Exemplary Output of Execution Order of Multiple APIs)

Next, an exemplary output of the execution order of the multiple APIs will be described with reference to FIG. 11. Here, an exemplary output of the execution order of the multiple APIs will be described using a design support screen displayed on the display 406 of the user terminal 201 as an example.

FIG. 11 is an explanatory diagram illustrating an exemplary output of the execution order of the multiple APIs. In FIG. 11, a design support screen 1100 is an exemplary operation screen indicating an execution order of multiple APIs (APIs 1 to 8, APIs 11 to 17, and APIs 101 to 106) selected by the user. Each API is represented by a block that imitates each API (e.g., block 1101).

Groups G1 to G3 into which the multiple APIs selected by the user are classified are displayed on the design support screen 1100. Furthermore, subgroups s1 to s3 into which the APIs 1 to 8 in the group G1 are classified are displayed. Furthermore, subgroups s4 to s6 into which the APIs 11 to 17 in the group G2 are classified are displayed. Furthermore, subgroups s7 and s8 into which the APIs 101 to 106 in the group G3 are classified are displayed.

According to the design support screen 1100, the user is enabled to determine in what order the multiple APIs (APIs 1 to 8, APIs 11 to 17, and APIs 101 to 106) are to be executed to efficiently carry out the execution while suppressing the time and cost. Note that, although illustration is omitted in the example of FIG. 11, a call order relation between APIs may be displayed.

For example, when a button B1 is selected by an operation input made by the user using the input device 407 illustrated in FIG. 4, a symbol (e.g., arrow) indicating the call order relation between the APIs is displayed on the design support screen 1100. This allows the user to understand which API and which API have a call order relation.

Furthermore, since magnitude relationships of the error rates and the latencies among the subgroups in each group are displayed, the user is enabled to understand that the order is determined in consideration of the error rates and the latencies. However, the display indicating the magnitude relationship of the error rates and the latencies may not be performed. Furthermore, the display representing the subgroups in each group may also not be performed.

Furthermore, the execution order of the APIs may be changed on the design support screen 1100 by an operation input made by the user. For example, the execution order of the API 7 may be changed by moving the block 1101 representing the API 7 from the subgroup s2 to the subgroup s3 by a drag-and-drop operation or the like.

### (Contents Stored in Execution History Table 1200)

Next, contents stored in the execution history table 1200 included in the service design device 101 will be described with reference to FIG. 12. The execution history table 1200 is implemented by, for example, a storage device such as the memory 302, the disk 304, or the like.

FIG. 12 is an explanatory diagram illustrating exemplary contents stored in the execution history table 1200. In FIG. 12, the execution history table 1200 has fields of a function, an API combination, an execution time, and success/failure of an execution result, and stores execution history information 1200-1 to 1200-7 as records by setting information in each field.

Here, the function indicates a function to be implemented by the multiple APIs. The function is represented by, for example, a keyword or a sentence. The API combination indicates an API combination and execution order for implementing the function. In FIG. 12, an uppercase alphabetic character (A, B, etc.) indicates an API. The execution time indicates a time needed from when execution of the multiple APIs starts until when the execution of the multiple APIs ends (unit: seconds). Note that, in a case where the multiple APIs are executed a plurality of times, a statistical value of the execution time (e.g., average execution time) is set.

The success/failure of the execution result indicates whether or not the execution of the multiple APIs has succeeded. The success/failure of the execution result "OK" indicates that the execution has succeeded. The success/failure of the execution result "NG" indicates that the execution has failed. Note that, in a case where the multiple APIs are executed a plurality of times, a statistical value of the success/failure of the execution result (e.g., one of OK or NG with a larger count) is set.

For example, the execution history information 1200-1 indicates the execution order "P → Q" of the API combination for implementing a function α, the execution time "2 [seconds]", and the execution result "NG".

For example, in response to the acceptance of the function designation, the service design device 101 refers to the execution history table 1200 to output recommendation result information of the multiple APIs that implement the designated function.

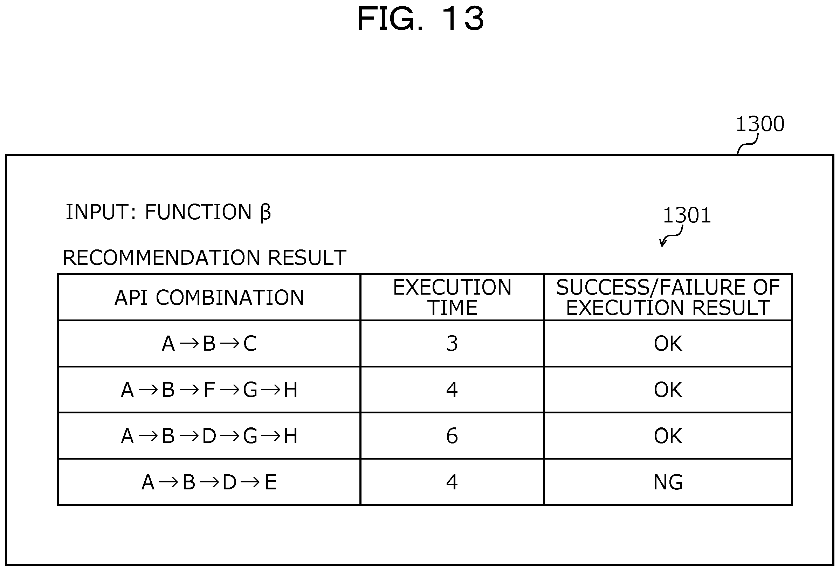

Here, a specific example of the recommendation result information will be described with reference to FIG. 13. Here, it is assumed that the service design device 101 accepts function designation from the user terminal 201. In this case, the recommendation result information output from the service design device 101 is displayed on, for example, the display 406 of the user terminal 201.

FIG. 13 is an explanatory diagram illustrating a specific example of the recommendation result information. In FIG. 13, recommendation result information 1300 indicates recommendation result 1301 of the multiple APIs that implement a function β. In the recommendation result 1301, among a plurality of types of API combinations that implements the function β, ones with a shorter execution time and success/failure of the execution result "OK" are displayed at the top.

According to the recommendation result information 1300, it becomes possible to recommend which APIs are to be combined and in what order the APIs are to be executed to implement the function β. For example, the user is enabled to determine that it is likely that the execution will succeed in the shortest time when the multiple APIs "A, B, and C" are executed in the order of "A → B → C" to implement the function β.

As a result, even a business user not familiar with APIs is enabled to easily determine which APIs are to be combined and in what order the APIs are to be executed to implement a certain function.

### (Service Design Processing Procedure of Service Design Device 101)

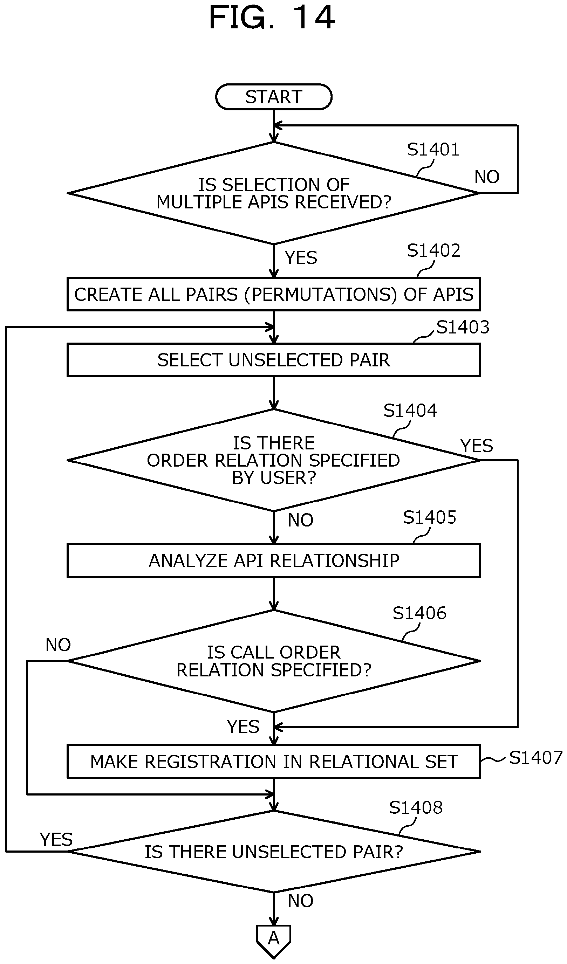

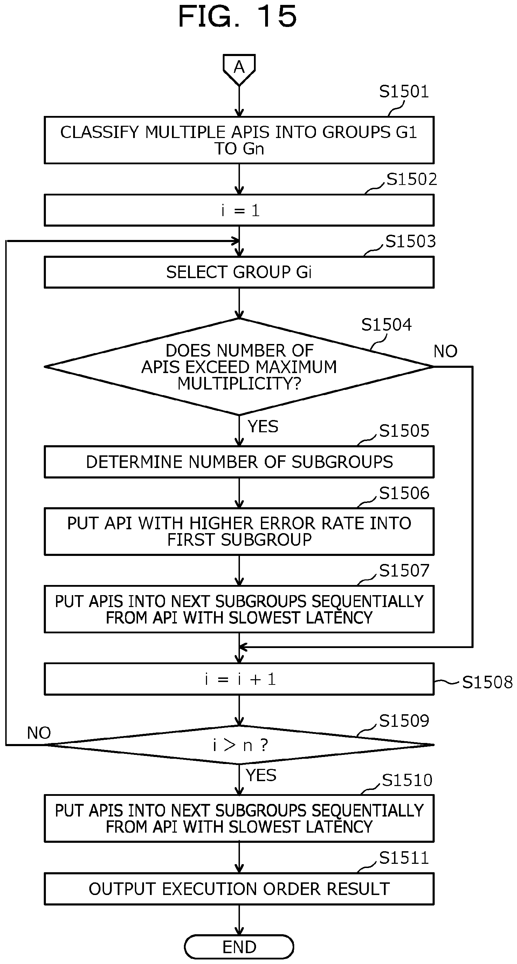

Next, a service design processing procedure of the service design device 101 will be described with reference to FIGs. 14 and 15.

FIGs. 14 and 15 are flowcharts illustrating exemplary service design processing procedures of the service design device 101. In the flowchart of FIG. 14, first, the service design device 101 determines whether or not selection of multiple APIs has been accepted (step S1401).

Here, the service design device 101 stands by for acceptance of selection of multiple APIs (No in step S1401). Then, if the service design device 101 accepts the selection of the multiple APIs (Yes in step S1401), it creates all pairs (permutations) of the APIs for the multiple selected APIs (step S1402).

Note that each pair includes two APIs having an order relation. For example, "API 1 → API 2" and "API 2 → API 1" are created as different pairs.

Next, the service design device 101 selects an unselected pair that has not been selected from among all the created pairs (step S1403). Then, the service design device 101 determines whether or not the selected pair has a call order relation specified by the user (step S1404).

Here, if there is a call order relation (Yes in step S1404), the service design device 101 proceeds to step S1407. On the other hand, if there is no call order relation (No in step S1404), the service design device 101 refers to the API repository 220 to perform API relationship analysis on the selected pair (step S1405).

Note that the API relationship analysis is a process of specifying the call order relation between the APIs on the basis of at least one piece of information of the specifications or usage history of the API. For example, in a case where the response item format of the first API matches the request item format of the second API in the selected pair (first API → second API), the service design device 101 determines that there is a call order relation.

Next, the service design device 101 determines whether or not the call order relation specified by the user is specified for the selected pair (step S1406). Here, if the call order relation is not specified (No in step S1406), the service design device 101 proceeds to step S1408.

On the other hand, if the call order relation is specified (Yes in step S1406), the service design device 101 registers the selected pair in a relational set (step S1407). Then, the service design device 101 determines whether or not there is an unselected pair that has not been selected among all the created pairs (step S1408).

Here, if there is an unselected pair (Yes in step S1408), the service design device 101 returns to step S1403. On the other hand, if there is no unselected pair (No in step S1408), the service design device 101 proceeds to step S1501 illustrated in FIG. 15.

In the flowchart of FIG. 15, first, the service design device 101 classifies the multiple selected APIs into groups G1 to Gn on the basis of the pairs registered in the relational set (step S1501). For example, the service design device 101 classifies the APIs having no call order relation with each other into the same group while classifying the APIs having the call order relation with each other into different groups.

Next, the service design device 101 sets "i" of the group Gi as "i = 1" (step S1502), and selects the group Gi (step S1503). Then, the service design device 101 determines whether or not the number of APIs in the selected group Gi exceeds the maximum multiplicity (step S1504).

Here, if the maximum multiplicity is not exceeded (No in step S1504), the service design device 101 proceeds to step S1508. On the other hand, if the maximum multiplicity is exceeded (Yes in step S1504), the service design device 101 determines the number of subgroups on the basis of the number of APIs in the group Gi and the maximum multiplicity (step S1505).

Note that the number of subgroups is assumed to be, for example, a value obtained by dividing the number of APIs in the group Gi by the maximum multiplicity (however, decimal place is rounded up). As an example, when the number of APIs in the group Gi is assumed to be "10" and the maximum multiplicity is assumed to be "3", the number of subgroups is "4".

Next, the service design device 101 refers to the API repository 220 to put the API with a higher error rate among the APIs in the group Gi into the first subgroup of the determined number of subgroups (step S1506). At this time, the service design device 101 may include an API with an error rate equal to or higher than a threshold value in the first subgroup.

Then, the service design device 101 refers to the API repository 220 to put the remaining APIs in the group Gi into the next subgroups sequentially from the API with the slowest latency (step S1507). As a result, the APIs in the group Gi are classified into the subgroups s1 to sm.

Next, the service design device 101 increments "i" of the group Gi (step S1508), and determines whether or not "i" is larger than "n" (step S1509). Here, if "i" is equal to or smaller than "n" (No in step S1509), the service design device 101 returns to step S1503.

On the other hand, if "i" is larger than "n" (Yes in step S1509), the service design device 101 determines the execution order of the multiple APIs on the basis of the groups G1 to Gn and the subgroups s1 to sm in the group Gi (step S1510). Then, the service design device 101 outputs the result of the determined execution order of the multiple APIs (step S1511), and terminates the series of processes according to the present flowchart.

As a result, it becomes possible to provide the user with information that enables, when designing a new service (new API) by combining multiple APIs, determining in what order the multiple APIs are to be executed to efficiently carry out the execution while suppressing the time and cost.

Note that, of the multiple selected APIs, there may be an API having no call order relation with any of the APIs. In this case, for example, the service design device 101 may inquire of the user about a call order relation with other APIs for the API having no call order relation with any of the APIs prior to the processing of step S1501.

Furthermore, the service design device 101 may determine to execute the API having no call order relation with any of the APIs before (i.e., at the beginning of) the groups G1 to Gn or after (i.e., at the end of) the groups G1 to Gn. Furthermore, in a case where there are multiple APIs having no call order relation with any of the APIs, the service design device 101 may determine the execution order of those APIs on the basis of a preset execution priority level.

Furthermore, in step S1404, the service design device 101 may determine whether or not the selected pair has a call order relation specified by the API provider.

As described above, according to the service design device 101 according to the embodiment, it becomes possible to accept selection of multiple APIs and specify a call order relation between APIs included in the multiple APIs on the basis of at least one piece of information of specifications or a usage history of each of the APIs of the multiple selected APIs. The API is, for example, a Web API. Additionally, according to the service design device 101, it becomes possible to determine the execution order of the multiple APIs on the basis of the specified call order relation between the APIs and output the determined execution order of the multiple APIs.

As a result, when creating a new API by combining multiple APIs, it becomes possible to derive the API execution order in consideration of the parallelism and the call order relation between the APIs. Accordingly, it becomes possible to easily specify an appropriate execution order of the multiple APIs, and to improve productivity by reducing a work time and a workload needed to design a service.

Furthermore, according to the service design device 101, it becomes possible to determine the execution order of the multiple APIs further on the basis of the maximum multiplicity, which is the upper limit of the number of APIs that may be executed in parallel.

As a result, in a case where the parallelism is limited by an API protocol or a hardware resource, it becomes possible to determine the order in which APIs having no call order relation with each other are executed in parallel in such a manner that the upper limit of the number of APIs that may be executed in parallel is not exceeded.

Furthermore, according to the service design device 101, it becomes possible to determine the execution order of the multiple APIs further on the basis of the error rate of each of the APIs.

As a result, it becomes possible to derive the execution order that may suppress wasted time and cost at the time of error occurrence by, for example, setting the API with a higher error rate to come earlier in the order.

Furthermore, according to the service design device 101, it becomes possible to output the determined execution order of the multiple APIs in association with the function implemented by the multiple APIs. Furthermore, according to the service design device 101, it becomes possible to output, in response to the acceptance of function designation, information for specifying the execution order of the multiple APIs corresponding to the designated function.

This makes it possible to record the multiple APIs that implement the function and the execution order of the multiple APIs in association with the function. Furthermore, it becomes possible to provide, in response to the function designation from the user, information that enables determining which APIs are to be combined and in what order the APIs are to be executed to implement the function.

Furthermore, according to the service design device 101, it becomes possible to output the determined execution order of the multiple APIs and the execution time and the success/failure of the execution result when the multiple APIs are executed according to the execution order in association with the function implemented by the multiple selected APIs. Furthermore, according to the service design device 101, it becomes possible to output, in response to the acceptance of the function designation, information for specifying the execution order of the multiple APIs corresponding to the designated function and the execution time and the success/failure of the execution result when the multiple APIs are executed according to the execution order.

This makes it possible to record, in association with the function, the multiple APIs that implement the function, the execution order of the multiple APIs, and the execution time and the success/failure of the execution result when the multiple APIs are executed according to the execution order. Furthermore, it becomes possible to provide, in response to the function designation from the user, information that enables determining which APIs are to be combined and in what order the APIs are to be executed to suppress the time and cost at the time of implementing the function.

Furthermore, according to the service design device 101, it becomes possible to specify the call order relation between the APIs included in the multiple APIs on the basis of the format of the request item and the response item of each of the APIs.

As a result, it becomes possible to specify the call order relation between the APIs from the relationship derived from the specifications of the API request and response.

Furthermore, according to the service design device 101, it becomes possible to specify the call order relation between the APIs included in the multiple APIs on the basis of the objective item of each of the APIs.

As a result, it becomes possible to specify the call order relation between the APIs on the basis of the dependence relationship between the APIs determined from the purpose of the APIs.

Furthermore, according to the service design device 101, it becomes possible to specify the call order relation between the first API and the second API on the basis of the execution order when the first API and the second API among the multiple APIs are used in combination.

As a result, it becomes possible to specify the call order relation between the APIs on the basis of the execution order of the APIs used in an existing service, an application, or the like.

Furthermore, according to the service design device 101, it becomes possible to classify the multiple APIs into the groups G1 to Gn on the basis of the specified call order relation between the APIs. Furthermore, according to the service design device 101, in a case where the number of APIs in any group Gi of the classified groups G1 to Gn exceeds the maximum multiplicity, it becomes possible to classify the APIs in the group Gi into the subgroups s1 to sm in such a manner that the number of APIs in each of the subgroups does not exceed the maximum multiplicity on the basis of the error rate of each of the APIs in the group Gi. Additionally, according to the service design device 101, it becomes possible to determine the execution order of the multiple APIs on the basis of the classified groups G1 to Gn and the subgroups s1 to sm in the group Gi.

As a result, it becomes possible to determine, in a case where the number of APIs in the group Gi exceeds the maximum multiplicity, the execution order in which the new API may be executed efficiently in consideration of the error rate of each of the APIs in the group Gi.

Furthermore, according to the service design device 101, in a case where the number of APIs in the group Gi exceeds the maximum multiplicity, it becomes possible to classify the APIs in any of the groups into the subgroups s1 to sm in such a manner that the number of APIs in each of the subgroups does not exceed the maximum multiplicity on the basis of the error rate and the latency of each of the APIs in the group Gi.

As a result, it becomes possible to determine, in a case where the number of APIs in the group Gi exceeds the maximum multiplicity, the execution order in which the service (new API) may be executed efficiently in consideration of the error rate and the latency of each of the APIs in the group Gi.

In view of those described above, according to the service design device 101, it becomes possible to specify the appropriate execution order of multiple APIs simply by selecting the multiple APIs that the user wants to combine, and to design the high-quality API service easily.

Note that the service design method described in the present embodiment may be implemented by a computer such as a personal computer or a workstation executing a program prepared in advance. The present service design program is recorded on a computer-readable recording medium such as a hard disk, a flexible disk, a CD-ROM, a DVD, or a USB memory, and is read from the recording medium to be executed by the computer. Furthermore, the present service design program may be distributed via a network such as the Internet.

Furthermore, the service design device 101 described in the present embodiment may also be implemented by a special-purpose integrated circuit (IC) such as a standard cell or a structured application specific integrated circuit (ASIC) or a programmable logic device (PLD) such as a field-programmable gate array (FPGA).

### CITATION LIST

### PATENT DOCUMENT

Patent Document 1: Japanese Laid-open Patent Publication No. 2010-020537
Patent Document 2: Japanese Laid-open Patent Publication No. 2014-222510
Patent Document 3: Japanese National Publication of International Patent Application No. 2019-505032
Patent Document 4: Japanese Laid-open Patent Publication No. 2018-112829

### REFERENCE SIGNS LIST

101Service design device
110Storage unit
200Information processing system
201User terminal
210Network
220API repository
300, 400Bus
301, 401CPU
302, 402Memory
303, 403Disk drive
304, 404Disk
305, 405Communication I/F
306, 408Portable recording medium I/F
307, 409Portable recording medium
406Display
407Input device
601Reception unit
602Specifying unit
603Determination unit
604Output unit
605Execution unit
1100Design support screen
1200Execution history table
1300Recommendation result information

## Claims

1. A service design device comprising:
a reception unit that receives selection of a plurality of APIs;
a specifying unit that specifies a call order relation between APIs included in the plurality of APIs on a basis of at least one piece of information of a specification or a usage history of each of the plurality of selected APIs; and
a determination unit that determines an execution order of the plurality of APIs on a basis of the call order relation between the APIs specified by the specifying unit.

2. The service design device according to claim 1, wherein
the determination unit determines the execution order of the plurality of APIs further on a basis of maximum multiplicity that is an upper limit of a number of APIs executable in parallel.

3. The service design device according to claim 1, wherein the determination unit determines the execution order of the plurality of APIs further on a basis of an error rate when each of the APIs is executed.

4. The service design device according to claim 1, further comprising: an output unit that outputs the execution order of the plurality of APIs determined by the determination unit.

5. The service design device according to claim 4, wherein
the output unit outputs the determined execution order of the plurality of APIs in association with a function implemented by the plurality of APIs.

6. The service design device according to claim 4, wherein
the output unit outputs the determined execution order of the plurality of APIs and an execution time and success or failure of an execution result when the plurality of APIs is executed according to the execution order in association with a function implemented by the plurality of APIs.

7. The service design device according to claim 1, wherein each of the plurality of APIs is a Web API.

8. The service design device according to claim 1, wherein
the specifying unit specifies the call order relation between the APIs included in the plurality of APIs on a basis of a format of a request item and a response item of each of the APIs.

9. The service design device according to claim 1, wherein
the specifying unit specifies the call order relation between the APIs included in the plurality of APIs on a basis of an objective item of each of the APIs.

10. The service design device according to claim 1, wherein
the specifying unit specifies the order relation of the call between a first API and a second API on a basis of the execution order when the first API and the second API among the plurality of APIs are used in combination.

11. The service design device according to claim 1, wherein the determination unit is configured to:
classify the plurality of APIs into a plurality of groups on a basis of the specified call order relation between the APIs;
in a case where a number of APIs in any one group of the plurality of classified groups exceeds maximum multiplicity that is an upper limit of the number of APIs executable in parallel, classify the APIs in the one group into a plurality of subgroups such that the number of APIs in each of the subgroups does not exceed the maximum multiplicity on a basis of an error rate of each of the APIs in the one group; and
determine the execution order of the plurality of APIs on a basis of the plurality of groups and the plurality of subgroups.

12. The service design device according to claim 11, wherein
in a case where the number of APIs in the one group of the plurality of classified groups exceeds the maximum multiplicity, the determination unit classifies the APIs in the one group into the plurality of subgroups such that the number of APIs in each of the subgroups does not exceed the maximum multiplicity on a basis of an error rate and latency of each of the APIs in the one group.

13. A service design method implemented by a computer, the method comprising:
receiving selection of a plurality of APIs;
specifying a call order relation between APIs included in the plurality of APIs on a basis of at least one piece of information of a specification or a usage history of each of the plurality of selected APIs; and
determining an execution order of the plurality of APIs on a basis of the call order relation between the APIs specified by the specifying.

14. A service design program comprising instructions which, when executed by a computer, cause the computer to execute processing, the processing comprising:
receiving selection of a plurality of APIs;
specifying a call order relation between APIs included in the plurality of APIs on a basis of at least one piece of information of a specification or a usage history of each of the plurality of selected APIs; and
determining an execution order of the plurality of APIs on a basis of the call order relation between the APIs specified by the specifying.
